# EUROPÄISCHE PATENTSCHRIFT

(11) **EP 1 942 318 B1**
(45) Veröffentlichungstag und Bekanntmachung des Hinweises auf die Patenterteilung: **12.04.2017**
(21) Anmeldenummer: 07023918.1
(22) Anmeldetag: 11.12.2007
(51) Int. Cl.: G01D 21/00, G01M 5/00, G08B 13/12, G01L 5/00, G01D 5/251

(54) **Sensor und Überwachungsvorrichtung zur Überwachung von Objekten**
Sensor and monitoring device for monitoring objects
Capteur et dispositif de surveillance destinés à la surveillance d'objets

(30) Priorität: 19.12.2006 DE 102006060480
(43) Veröffentlichungstag der Anmeldung: 09.07.2008
(73) Patentinhaber: INGLAS GmbH & Co. KG., 88697 Bermatingen (DE)
(72) Erfinder: Meisel, Thomas, 88697 Bermatingen (DE); Braun, Rüdiger, 88090 Immenstaad (DE); Arnold, Manfred, 88074 Meckenbeuren (DE); Hartweg, Andreas, 6922 Wolfurt (AT)
(74) Vertreter: Otten, Roth, Dobler & Partner mbB Patentanwälte

(56) Entgegenhaltungen:
- DE-A1-102004 027 976
- GB-A- 2 164 183
- JP-A- 2000 321 099
- US-A1- 2001 035 122

## Beschreibung

Die Erfindung betrifft einen Sensor und eine Überwachungsvorrichtung zur Überwachung von Objekten nach dem Oberbegriff des Anspruchs 1.

Die Überwachung von Objekten, insbesondere im Hinblick auf geologische Veränderungen wie Hangrutschungen, Steinschlag, Lawinenabgängen oder dergleichen gewinnt zunehmend an Bedeutung. Darüber hinaus ist eine Überwachung auf Veränderungen an Gebäuden, Brücken, Pipelines, Masten, Seilbahnen, Dachkonstruktionen, Transportladungen, insbesondere auf Schiffen, Lastkraftwagen, usw. von Vorteil. Zum einen ist eine solche Überwachung aus Sicherheitsgründen sinnvoll, zum anderen zur Vermeidung oder Verminderung von Schadensereignissen.

Ein Verfahren und ein Sensorsystem zur Registrierung von Schadensereignissen an Sicherungsnetzen gegen Felsbruch oder Steinschlag, Erdrutsch und Lawinen ist beispielsweise in der Druckschrift DE 10 2004 027 976 A1 beschrieben.

Die dort beschriebene Vorrichtung beschreibt unter anderem Sensoren, die mit einem Zugseil in Verbindung stehen und einen Zug an diesem Zugseil sensorisch erfassen.

Nachteilig an den dort beschriebenen Sensoren ist der Umstand, dass sie gegen Rückstellkräfte betätigt werden, d.h. das auslösende Ereignis muss zuverlässig im Moment des Geschehens erfasst und festgehalten werden. Eine spätere Abfrage des Sensors kann wieder den unveränderten Ruhezustand zum Ergebnis haben.

Zudem sind den Druckschriften JP 2000 321 099 A sowie
GB 2 164 183 A Zaunüberwachungssysteme mit Sensorik zu entnehmen, wobei das jeweilige Auslöseelement selbsttätig rückstellbar beweglich gelagert ist.

Nachteilig hierbei ist jedoch, dass zum Beispiel zahlreiche kleinere Ereignisse durchaus zur Auslösung beziehungsweise Verstellung des Auslöseelementes führen können. Derartige Fehlalarme sind unerwünscht.

Aufgabe der vorliegenden Erfindung ist es dem gegenüber, einen Überwachungssensor vorzuschlagen, der eine zuverlässige Betriebsweise gewährleistet, wobei gewöhnliche Ereignisse nicht zu einer Auslösung des Sensors beziehungsweise Alarmierung führen.

Diese Aufgabe wird ausgehend von einem Stand der Technik nach dem Oberbegriff der Ansprüche 1 und 14 durch deren kennzeichnende Merkmale gelöst.

Durch die in den Unteransprüchen genannten Merkmale sind vorteilhafte Ausführungen und Weiterbildungen in der Erfindung möglich.

Dementsprechend zeichnet sich ein erfindungsgemäßer Sensor dadurch aus, dass ein Halteelement zur Erzeugung einer Haltekraft als Schwellwert für die Auslösung des Sensors vorgesehen ist, dass ein in seiner Haltekraft einstellbares Halteelement und dass ein verformbares Widerstandselement als Halteelement vorgesehen ist, wobei das Halteelement zur Verwirklichung einer Schwellwertkraft als verformbares Widerstandselement mit definierten Sollbruchstellen ausgebildet ist.

Das Auslöseelement, das beispielsweise ein Zuganker, ein Druckstößel oder dergleichen sein kann, dessen Bewegung sensorisch erfasst wird, wird bei einem erfindungsgemäßen Sensor nicht selbsttätig rückstellbar ausgebildet. Dies bedeutet, dass bei einem einmaligen Auslöseereignis das Auslöseelement aus der Ruheposition in eine Signalstellung gebracht wird. Diese Signalstellung ist jederzeit abfragbar, insbesondere auch lange nach dem auslösenden Ereignis. Zur Rückstellung des Sensors ist eine Bedienperson erforderlich, die an den Ort des Sensors kommt und diesen in seinen Ruhezustand zurückversetzt. Diese Ausgestaltung des Sensors erhöht die Sicherheit der Ereignismitteilung und -überwachung enorm.

Gemäß der Erfindung wird ein Halteelement für das Auslöseelement vorgesehen, das eine Haltekraft auf das Auslöseelement ausübt, um einen Schwellwert für die zum Auslösen des Sensors erforderliche Auslösekraft zu bewerkstelligen. Auf diese Weise können zugelassene, normalerweise stattfindende Ereignisse, wie beispielsweise übliche witterungsbedingte Belastungen durch Wind oder dergleichen ausgeblendet werden. Als Halteelement zur Verwirklichung einer Schwellwertkraft wird ein verformbares Widerstandselement vorgesehen. Ein solches Widerstandselement kann mit definierten Sollbruchstellen versehen werden oder auf andere Weise die vorgegebenen Schwellwertkraft, beispielsweise durch ein entsprechendes Elastizitätsmodul oder dergleichen sicherstellen.

Zudem wird gemäß der Erfindung ein einstellbares Halteelement zur Erzeugung der Haltekraft für den Schwellwert verwendet, so dass der gleiche Sensor anwendungsspezifisch angepasst werden kann. Ein einstellbares Halteelement wäre beispielsweise durch Vorspannung eines elastischen Körpers realisierbar, der durch die Auslösekraft an einem Hindernis vorbeigezogen oder durch eine Öffnung hindurchgezogen wird. Durch die Vorspannung eines solchen verformbaren Körpers kann die Gegenkraft des Körpers eingestellt werden, die dieser bei Überwindung des Widerstandes aufbringt.

Für die vorrangig mit einem erfindungsgemäßen Sensor zu detektierenden Ereignisse wie geologische Veränderungen, beispielsweise Steinschlag oder dergleichen, entsprechende Veränderungen an Gebäuden, beispielsweise Dachkonstruktionen, Brücken oder auch von schweren Lasten bewegen sich die sinnvollerweise verwendeten Schwellwerte für die Auslösekraft typischerweise zwischen 100 N und 1.000 N.

Auch bei kurzzeitigen Ausfällen der Detektorelemente, die die Bewegung des Auslöseelementes erfassen sollen, ist nachträglich das Erkennen des Ereignisses möglich.

Die Bewegung des Auslöseelementes kann durch übliche Detektorelemente, beispielsweise induktiv, kapazitiv, magnetisch, optisch, usw. erfasst werden.

In einer bevorzugten Ausführungsform wird der Sensor und somit auch die Detektoreinheit für die Lage des Auslöseelementes als passiver Sensor ausgebildet. Dies bedeutet, dass keine oder nur minimale Energie im Ruhezustand für die Überwachung des Auslöseelementes verbraucht wird. So kann beispielsweise als Auslöseelement ein Zuganker oder Druckstößel verwendet werden, der einen Permanentmagneten trägt und bei dessen Bewegung ein Reedschalter betätigt wird, der im Ruhezustand offen und somit stromlos ist.

In einer vorteilhaften Ausführungsform der Erfindung wird als Kraftübertragungselement ein Zug- und/oder ein Druckübertragungselement verwendet. Es kann sich dabei, wie bereits erwähnt, beispielsweise um ein Zugseil oder eine Zug- und/oder Druckstange handeln, mittels denen ein Auslöseelement, z.B. ein Aufnahmekörper für einen Permanentmagneten oder dergleichen bewegt werden kann. Die Bewegung eines solchen Auslöseelementes kann erfasst und weitergemeldet werden. Bei erfindungsgemäßer Ausgestaltung, d.h. bei einer Auslösung ohne Rückstellung ist dabei nicht nur die Bewegung als solche, sondern auch die dauerhaft eingenommene Auslöseposition als Sensorsignal verwendbar, d.h. auch lange nach dem stattgefundenen Ereignis lässt sich die Auslöseposition des Auslöseelementes feststellen. Weiterhin kann es von Vorteil sein, ein Verzögerungs- oder Bremselement für das zur Auslösung verwendete Übertragungselement vorzusehen. Durch ein solches Verzögerungs- oder Bremselement ist eine Überbeanspruchung des Kraftübertragungselementes durch Belastungsspitzen, z.B. bei einem schlagartig einsetzenden Ereignis unterbunden.

Eine einfache, aber wirksame Möglichkeit, ein solches Verzögerungselement auszubilden, besteht beispielsweise darin, eine Seilschleife bei einem Seil anzulegen und mit einer definierte Klemmkraft zu klemmen. Bei einem Zug auf das Zugseil kann demnach die Seilschleife gegen die Klemmkraft des Klemmelementes nachgeben und somit eine gewisse Seillänge ohne Auslösung des Sensor zur Verfügung stellen. Dies kann beispielsweise dann sinnvoll sein, wenn zwischen dem Zugseil und dem Sensor eine Lastaufnahme, beispielsweise ein Fangnetz oder dergleichen, beispielsweise für das Abfangen von Felsbrocken bei Steinschlag vorgesehen ist und eine Überlastung durch schlagartige, massive Belastung der Lastaufnahme bzw. im konkret dargestellten Fall des Fangnetzes verhindert werden soll.

Der Sensor kann dabei auch auf der dem Verzögerungselement gegenüberliegenden Seite der Lastaufnahme angeordnet werden.

In einer weiteren besonderen Ausführungsform wird zudem ein Führungselement für das Übertragungselement vorgesehen. Auf diese Weise ist es möglich, die Kraftübertragung auch in nicht geradlinigem Weg auf das Auslöseelement des Sensors vorzunehmen. Ein Beispiel für ein derartiges Führungselement wäre beispielsweise ein sogenannter Bowdenzug, in dem ein Zugseil geführt ist. Ein solcher Bowdenzug kann auch um Kurven und Hindernisse herum vom Ort des Ereignisses bis hin zum Auslöseelement des Sensors gelegt werden.

Weiterhin wird bei entsprechend gefährdeten Kraftübertragungselementen vorzugsweise ein Schutzelement vorgesehen, das das Kraftübertragungselement gegen Zerstörung, beispielsweise durch mechanische Einwirkung wie Steinschlag, oder Witterungseinflüsse wie Sonneneinstrahlung oder Feuchtigkeit usw. schützt. Ein solches Schutzelement kann zugleich als Führungselement ausgeführt sein. Ein Bowdenzug kann z.B. beide Funktionen wahrnehmen.

Weiterhin wird vorzugsweise.bei einem erfindungsgemäßen Sensor eine Kontrolleinheit zur Kontrolle des internen Betriebszustandes vorgesehen. Diese Kontrolleinheit ist somit in der Lage, die Einsatzbereitschaft des Sensors ständig zu überwachen und Defekte oder Fehlfunktionen weiterzumelden.

Dies ist insbesondere dann von Vorteil, wenn gemäß einer bevorzugten Ausführungsform eine drahtlose. Datenübertragung an eine externe Überwachungsstelle vorgesehen ist. Ein derartiger Sensor, der beispielsweise im Hochgebirge oder an Gebäuden in unzugänglicher Region angebracht werden kann, ist dadurch zum einen leicht und ohne aufwändige Verkabelung zu installieren. Darüber hinaus kann ein solcher Sensor ohne weiteres an eine beliebige Meldestelle sein Sensorsignal übertragen. In einer Weiterbildung kann dabei auch ein Abfragemodus vorgesehen werden, über den ein solcher Sensor von einem externen Gerät angerufen und hinsichtlich seines Betriebszustandes und seines Auslösezustandes abgefragt werden kann.

Eine solche drahtlose Datenübertragung kann beispielsweise über ein Funkmodem zu einer Basisstation oder aber auch über ein öffentliches Telefon- oder Datennetz, usw. stattfinden.

Vorteilhafterweise wird ein erfindungsgemäßer Sensor zudem mit einer regenerativen Energiequelle, beispielweise einer Solarzelle versehen, mittels der die für die Bereitstellung der Sensorfunktionen auch bei passivem Sensorelement erforderliche Energie aufgebracht werden kann. Eine solche regenerative Energiequelle wird in bekannter Weise bevorzugt mit einer Speichereinheit, beispielsweise einem Akku, einem Kondensator oder dergleichen kombiniert, um eine dauerhafte Einsatzbereitschaft auch bei nicht aktiver Energiequelle, z.B. bei Verwendung einer Solarzelle bei Nacht, usw. bereitzustellen.

Neben dem erfindungsgemäß nicht rückstellbar auszulösenden Auslöseelement können weitere Sensorelemente zur Erfassung weiterer Informationen in einen erfindungsgemäßen Sensor integriert werden. So kann beispielsweise ein Dehnungsmessstreifen vorhanden sein, um die exakte Belastung des Kraftübertragungselementes zu erfassen. Für den Dehnungsmessstreifen kann in einer besonderen Ausführungsform auch ein separates Kraftübertragungselement vorgesehen werden, so dass dieser auch ohne Schwellwert messbereit ist.

Ein erfindungsgemäßer Sensor wird vorzugsweise in eine Überwachungsvorrichtung integriert, die mehrere derartige Sensoren umfasst, so dass eine Auswertung in eine Auswerteeinheit zur Echtheitsprüfung eines Sensorsignals möglich ist. Über bestimmte Algorithmen können dementsprechend die Ergebnisse verschiedener Sensoren verarbeitet und zu einer Aussage zur Verifizierung eines zu erfassenden Ereignisses ausgewertet werden.

Ein Ausführungsbeispiel der Erfindung ist in der Zeichnung dargestellt und wird anhand der Figuren nachfolgend näher erläutert.

Im Einzelnen zeigen
- Figur 1: eine schematische Schnittdarstellung durch einen erfindungsgemäßen Sensor,
- Figur 2: eine schematische Skizze für eine beispielhafte Einsatzmöglichkeit des Sensors gemäß Figur 1,
- Figur 3: eine schematische Darstellung einer Vorrichtung zur Bereitstellung eines Verzögerungselementes für ein Zugseil und
- Figur 4: ein weiteres Ausführungsbeispiel für den Einsatz eines erfindungsgemäßen Sensors.

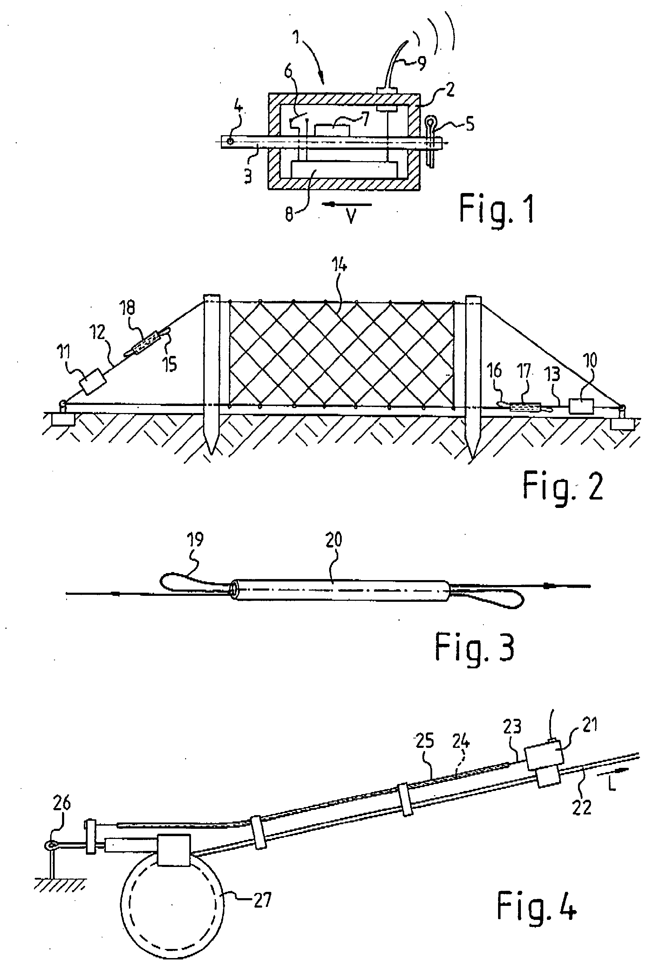

Der Sensor 1 gemäß Figur 1 umfasst ein Sensorgehäuse 2, das von dem Auslöseelement 3 durchsetzt ist. Das Auslöseelement 3 ist mit einer Öse 4 zur Befestigung eines Kraftübertragungselementes, beispielsweise eines Zugseils oder dergleichen versehen. Auf der der Öse 4 gegenüberliegenden Seite ist ein Sicherungssplint 5 eingezeichnet, der den Verschiebeweg V zunächst begrenzt.

Im Inneren des Sensorgehäuse 2 ist ein sogenannter Reedschalter und ein Permanentmagnet 7 schematisch dargestellt. Der Permanentmagnet 7 ist auf dem Auslöseelement 3 befestigt. Der Reedschalter 6 ist mit einer Kontrolleinheit 8 verbunden, die mit einer Antenne 9 zur Signalübertragung versehen ist.

Für die Funktion des dargestellten Sensors ist die Erfassung der Lage des Auslöseelementes 3 erforderlich. Bei einem Zug auf das Auslöseelement 3 über die Öse 4, beispielsweise über ein Zugseil wird das Auslöseelement 3 in Richtung des Pfeils V ausgezogen. Der Splint 5 ist dabei hinsichtlich seiner Form und seines Materials so gewählt, dass er bei einer bestimmten Belastung, die den Schwellwert für die Auslösekraft darstellt, abgeschert werden kann, so dass das Auslöseelement 3 vollständig soweit ausziehbar ist, bis der Permanentmagnet 7 im Bereich des Reedschalters 6 zu liegen kommt. Der Auszug kann dabei über einen nicht näher dargestellten Anschlag begrenzt sein. Bei der schematischen Darstellung gemäß Figur 1 könnte beispielsweise die Vorderkante des Permanentmagnets 7 am Sensorgehäuse 2 anschlagen. Der verwendete Anschlag sollte natürlich an die zu erwartende Belastung angepasst sein.

Durch die entsprechende Position des Permanentmagneten 7 wird der Reedschalter 6 geschlossen, so dass die Kontrolleinheit 8 das Ausziehen des Auslöseelementes 3 erkennt. Über die Antenne 9 ist die Kontrolleinheit 8 in der Lage, mit einer externen Oberwachungs- oder Meldestelle zu kommunizieren, so dass der Zustand des Reedschalters 6 durch die Kontrolleinheit 8 weitergeleitet wird. Die Kontrolleinheit 8 ist auch über eine Abfrage von einer externen Meldestelle in der Lage, den Sensorzustand zu melden.

Die Stromversorgung der Kontrolleinheit 8 findet über ein nicht näher dargestelltes Speicherelement statt, das über eine regenerative Energiequelle, beispielsweise eine Solarzelle gespeist wird.

Die dargestellte Ausführungsform zeigt einen sehr einfach aufgebauten Sensor, der zur Erfassung der Position des Auslöseelementes 3 im Ruhezustand kaum Strom verbraucht. Der geöffnete Reedschalter 6 benötigt im Ruhezustand gar keinen Strom. Der einzige Energiebedarf besteht im Bereich der Kontrolleinheit 8, die den Schaltzustand des Reedschalters 6 überwachen muss.

Ein derart geringer Energiebedarf ist problemlos beispielsweise über eine Solarzelle abzudecken und kann mit einer entsprechenden Speichereinheit, z.B. einem Akkumulator oder einem Kondensator gepuffert werden.

Ist das Auslöseelement 3 einmal ausgezogen, so verharrt es in dieser Position und wird nicht selbsttätig zurückgestellt.

Demnach kann jederzeit ein stattgefundenes Ereignis anhand der einmal veränderten Position des Auslöseelementes 3 erkannt werden.

Figur 2 zeigt zwei derartige Sensoren 10, 11, die mit Abspannseilen 12, 13 eines Schutznetzes 14, wie sie beispielsweise gegen Schutz vor Steinschlag Verwendung finden, verbunden sind. Die Abspannseile 12, 13 sind jeweils mit einer Verzögerungsschleife 15, 16 versehen, die in jeweils einer Klemmvorrichtung 17, 18 verklemmt ist.

Das Schutznetz 14 wird bei Steinschlag oder einem ähnlichen Ereignis lastbeaufschlagt, so dass sich ein Zugabspannseil 12, 13 ergibt. Über die Schleifen 15, 16 und die Klemmvorrichtungen 17, 18 kann jedes Abspannseil 12, 13 gegen einen vorgegebenen Widerstand ein Stück weit nachgeben, ohne dass die Abspannseile 12, 13 oder die Sensoren 11, 10 mit einer schlagartig überhöhten Zugkraft belastet werden. Sobald die Zugkraft an den Abspannseilen 12, 13 den Schwellwert der Sensoren 10, 11 überschreitet, werden deren Auslöseelemente 3 ausgezogen. Damit ist der Sensorzustand der Sensoren 10, 11 dauerhaft geändert, so dass jederzeit die Lastbeaufschlagung des Schutznetzes 14 von einer externen Kontrolleinheit erfassbar ist.

Um die Sensoren 10, 11 in den Ausgangszustand zurückzusetzen, ist es bei dieser Art Sensoren zwingend erforderlich, dass eine Bedienperson an den Ort des Schutznetzes 14 gelangt. Dabei kann sich diese Person zugleich über das lastauslösende Ereignis durch Augenschein informieren.

Figur 3 zeigt eine besondere Ausführungsform einer Seilschleife 19, die durch ein Bremsrohr 20 gelegt ist. Beim Durchzug der Schleifenenden durch das Bremsrohr 20 ergibt sich ein entsprechender Widerstand, der der auf das Seil ausgeübten Zugkraft entgegengerichtet ist.

Figur 4 zeigt eine Anordnung, bei der der Sensor 21 an einem sich unter Last bewegenden Spannseil 22 befestigt ist. Das Auslöselement 23 ist mit einem Zugseil 24 verbunden, das in einem Bowdenzug 25 verläuft und daher gestrichelt dargestellt ist. Am Ende des Bowdenzugs 25 ist das Zugseil 24 in einer ortsfesten Verankerung 26 fixiert. Das Spannseil 22, das den Sensor 21 trägt ist durch eine Rohrschleife 27 gefädelt und anschließend ebenfalls an der Verankerung 26 befestigt. Die Rohrschleife 27 dient als Bremsring bei Lastbeaufschlagung des Spannseils 22.in Richtung des Kreises L. Der Bremsring bzw. die Rohrschleife 27 schützt das Spannseil 22 vor schlagartiger Belastung, da durch Verformung des Bremsrings das Spannseil 22 ein Stück weit nachgeben kann.

Im dargestellten Äusführungsbeispiel gemäß Figur 4 verläuft der Bowdenzug 25 im Wesentlichen parallel zum Spannseil 22 bis zur Verankerung 26. Es ist jedoch ohne weiteres erkennbar, dass bei Verwendung eines solchen Bowdenzugs hier grundsätzlich ein völlig anderer Verlauf, beispielsweise auch ein gekrümmter Verlauf zur Führung des Zugseils 24 gewählt werden kann. Entscheidend ist in diesem Fall für das Auslösen des Sensors 21 stets die relative Lageänderung zwischen Sensor 21 und dem dem Sensor 21 zugewandten Ende des Bowdenzugs 25.

Die Figuren können nur beispielhaft den Aufbau und Einsatz eines erfindungsgemäßen Sensors veranschaulichen. Wesentlich ist die Auslösung des Sensors ohne selbsttätige Rückstellung, die auf vielfältige Weise realisierbar ist.

Ein derartiger Sensor kann z.B. zur Überwachung geologischer Veränderungen, von Steinschlag, Muränenabgängen, Lawinen aber auch als übersteigsensor für mobile Absperrungen, Gitterzäune, usw. zur polizeilichen Anwendung, beispielsweise bei Veranstaltungen usw. Verwendung finden. Auch die Überwachung von Tunnel z.B. auf Risse, usw. ist dabei möglich. Durch den geringen Energiebedarf kann die Sensorenergie dabei sogar aus der Tunnelbeleuchtung gewonnen werden.

Auch die Sicherung von Ladung gegen Verrutschen, z.B. von Containern auf Schiffen, usw., die Sicherung von frei gelagerten Gegenständen, beispielsweise Holz, Baumaterial usw. kann mit einem derartigen Sensor z.B. zur Diebstahlverhütung vorgenommen werden. Letzten Endes können Bauwerke aller Art im Hinblick auf Fehler, beispielsweise Risse, Rissbildung oder dergleichen überwacht werden.

Schließlich kann ein solcher Sensor auch als Einbruchsensor, z.B. am Abstandshalter von Isolierverglasungen oder dergleichen Verwendung finden. Diese und weitere Anwendungsmöglichkeiten sind durch einen mit wenig Aufwand herstellbaren und leicht installierbaren Sensor gemäß der Erfindung zu realisieren. Der Sensor kann problemlos als transportable Komplettsystem in einem entsprechenden Sofortmaßnahmebehältnis, beispielsweise einem Koffer bereitgestellt werden und kann problemlos nahezu an beliebigen Orten auch vorübergehend im mobilen Einsatz angebracht werden.

Als externe Melde- oder Überwachungsstelle kann durch eine: entsprechende drahtlose Verbindung jedes Telefon oder jeder Computer mit Datenkommunikation dienen.

### Bezugszeichenliste

- 1: Sensor
- 2: Sensorgehäuse
- 3: Auslöseelement
- 4: Öse
- 5: Splint
- 6: Reed-Schalter
- 7: Permanentmagnet
- 8: Kontrolleinheit
- 9: Antenne
- 10: Sensor
- 11: Sensor
- 12: Abspannseil
- 13: Abspannseil
- 14: Schutznetz
- 15: Schleife
- 16: Schleife
- 17: Klemmvorrichtung
- 18: Klemmvorrichtung
- 19: Seilschleife
- 20: Bremsrohr
- 21: Sensor
- 22: Spannseil
- 23: Auslöseelement
- 24: Zugseil
- 25: Bowdenzug
- 26: Verankerung
- 27: Rohrschleife

## Patentansprüche

1. Sensor (1) zur Überwachung von Gegenständen, die einer Lastbeaufschlagung unterliegen, insbesondere zur Überwachung von Bauwerksbewegungen, geologischen Veränderungen, Transportladungsbewegungen oder dergleichen, mit einem Kraftübertragungselement(12, 13), das mit dem zu überwachenden Gegenstand einerseits und mit einem Auslöseelement (3, 23) des Sensors andererseits verbunden ist, und mit einem Sensorelement (6) zur Detektion der Lageänderung des Auslöseelements, wobei das Auslöseelement (3, 23) nicht selbsttätig rückstellbar beweglich gelagert ist, **dadurch gekennzeichnet, dass** ein in seiner Haltekraft einstellbares Halteelement (5) zur Erzeugung einer Haltekraft als Schwellwert für die Auslösung des Sensors vorgesehen ist, wobei das Halteelement (5) zur Verwirklichung einer Schwellwertkraft als verformbares Widerstandselement mit definierten Sollbruchstellen ausgebildet ist.

2. Sensor nach Anspruch 1, **dadurch gekennzeichnet, dass** der Sensor als Passivsensor ausgebildet ist, so dass das für die Detektion der Lageänderung des Auslöseelementes (3) verwendete Sensorelement (6) im Ruhezustand stromlos ist.

3. Sensor nach einem der vorgenannten Ansprüche, **dadurch gekennzeichnet, dass** das Kraftübertragungselement (12, 13) ein Zug- und/oder ein Druckübertragungselement (12, 13) ist.

4. Sensor nach einem der vorgenannten Ansprüche, **dadurch gekennzeichnet, dass** das Kraftübertragungselement (12, 13) ein Zugseil (12, 13) ist.

5. Sensor nach einem der vorgenannten Ansprüche, **dadurch gekennzeichnet, dass** ein Verzögerungselement (15, 16, 17, 18) für das Kraftübertragungselement (12, 13) vorgesehen ist.

6. Sensor nach einem der vorgenannten Ansprüche, **dadurch gekennzeichnet, dass** ein Führungselement (25) für das Kraftübertragungselement (12, 13) vorgesehen ist.

7. Sensor nach einem der vorgenannten Ansprüche, **dadurch gekennzeichnet, dass** ein Schutzelement (25) für das Kraftübertragungselement (12, 13) vorgesehen ist.

8. Sensor nach einem der vorgenannten Ansprüche, **dadurch gekennzeichnet, dass** eine Kontrolleinheit (8) zur Kontrolle des internen Betriebszustands vorgesehen ist.

9. Sensor nach einem der vorgenannten Ansprüche, **dadurch gekennzeichnet, dass** er für eine drahtlose Datenübertragung ausgebildet ist.

10. Sensor nach einem der vorgenannten Ansprüche, **dadurch gekennzeichnet, dass** er eine regenerative Energiequelle aufweist.

11. Überwachungsvorrichtung zur Überwachung einer Lastbeaufschlagung auf einen Gegenstand, **dadurch gekennzeichnet, dass** mehrere Sensoren nach einem der vorgenannten Ansprüche und eine Auswerteeinheit zur Vornahme einer Echtheitsprüfung einzelner Sensorsignale auf der Basis anderer Sensorsignale vorgesehen ist.

## Claims

1. A sensor (1) for monitoring object, which are subject to a load application, in particular for monitoring structural movements, geological changes, transport cargo movements or the like, with a force transmission element (12, 13), which is connected with the object to be monitored on the one hand and with a trigger element (3, 23) of the sensor on the other hand, and with a sensor element (6) for the detection of the change in position of the trigger element, wherein the trigger element (3, 23) is movably mounted in a not automatically resettable manner, **characterized in that** a holding element (5) settable in its holding force is provided for generating a holding force as a threshold value for triggering the sensor, wherein the holding element (5) is designed for the realization of a threshold value force as a deformable resistance element with defined predetermined breaking points.

2. A sensor according to Claim 1, **characterized in that** the sensor is designed as a passive sensor, so that the sensor element (6) used for the detection of the change in position of the trigger element (3) is currentless in the idle state.

3. A sensor according to any one of the aforementioned claims, **characterized in that** the force transmission element (12, 13) is a traction or pressure transmission element (12, 13).

4. A sensor according to any one of the aforementioned claims, **characterized in that** the force transmission element (12, 13) is a traction cable (12, 13).

5. A sensor according to any one of the aforementioned claims, **characterized in that** the delay element (15, 16, 17, 18) is provided for the force transmission element (12, 13).

6. A sensor according to any one of the aforementioned claims, **characterized in that** a guide element (25) is provided for the force transmission element (12, 13).

7. A sensor according to any one of the aforementioned claims, **characterized in that** a protective element (25) is provided for the force transmission element (12, 13).

8. A sensor according to any one of the aforementioned claims, **characterized in that** a control unit (8) is provided for the control of the internal operating state.

9. A sensor according to any one of the aforementioned claims, **characterized in that** it is designed for a wireless data transmission.

10. A sensor according to any one of the aforementioned claims, **characterized in that** it has a regenerative energy source.

11. A monitoring device for monitoring a load application on an object, **characterized in that** several sensors according to any one of the aforementioned claims and an evaluation unit are provided for carrying out an authenticity test of individual sensor signals on the basis of other sensor signals.

## Revendications

1. Capteur (1) destiné à la surveillance d'objets qui sont soumis à une charge, en particulier pour la surveillance de mouvements de bâtiments, de variations géologiques, de mouvements de cargaison de transport ou similaires, avec un élément de transmission de force (12, 13) qui est raccordé d'un côté à l'objet à surveiller et d'un autre côté à un élément de déclenchement (3, 23) du capteur (1), et avec un élément de capteur (6) pour la détection de la variation de position de l'élément de déclenchement, l'élément de déclenchement (3, 23) étant supporté de façon mobile sans possibilité de retour automatique à la position initiale, **caractérisé en ce qu'**il est prévu un élément de retenue (5), dont la force de retenue est réglable, pour la production d'une force de retenue en tant que valeur de seuil pour le déclenchement du capteur, l'élément de retenue (5) étant constitué pour la réalisation d'une force de valeur de seuil en tant qu'élément de résistance déformable avec des emplacements destinés à la rupture définis.

2. Capteur selon la revendication 1, **caractérisé en ce que** le capteur est constitué en tant que capteur passif de telle sorte que l'élément de capteur (6) utilisé pour la détection de la variation de position de l'élément de déclenchement (3) est sans courant dans l'état de repos.

3. Capteur selon l'une des revendications précédentes, **caractérisé en ce que** l'élément de transmission de force (12, 13) est un élément de transmission de traction et/ou un élément de transmission de pression (12, 13).

4. Capteur selon l'une des revendications précédentes, **caractérisé en ce que** l'élément de transmission de force (12, 13) est un câble de traction (12, 13).

5. Capteur selon l'une des revendications précédentes, **caractérisé en ce qu'**il est prévu un élément retardateur (15, 16, 17, 18) pour l'élément de transmission de force (12, 13).

6. Capteur selon l'une des revendications précédentes, **caractérisé en ce qu'**il est prévu un élément de guidage (25) pour l'élément de transmission de force (12, 13).

7. Capteur selon l'une des revendications précédentes, **caractérisé en ce qu'**il est prévu un élément de protection (25) pour l'élément de transmission de force (12, 13).

8. Capteur selon l'une des revendications précédentes, **caractérisé en ce qu'**il est prévu une unité de contrôle (8) pour le contrôle de l'état de fonctionnement interne.

9. Capteur selon l'une des revendications précédentes, **caractérisé en ce qu'**il est constitué pour une transmission de données sans fil.

10. Capteur selon l'une des revendications précédentes, **caractérisé en ce qu'**il présente une source d'énergie renouvelable.

11. Dispositif de surveillance destiné à la surveillance d'une charge exercée sur un objet, **caractérisé en ce qu'**il est prévu plusieurs capteurs selon l'une des revendications précédentes et une unité d'analyse destinée à procéder à un contrôle en temps réel de différents signaux de capteur sur la base d'autres signaux de capteur.
